# EUROPEAN PATENT SPECIFICATION

(11) **EP 3 242 795 B1**
(45) Date of publication and mention of the grant of the patent: **02.10.2019**
(21) Application number: 16735528.8
(22) Date of filing: 09.01.2016
(51) Int. Cl.: B32B 3/26

(54) **MULTI-LAYER NPR STRUCTURES**
MEHRSCHICHTIGE NPR-STRUKTUREN
STRUCTURES NPR MULTICOUCHES

(30) Priority: 09.01.2015 US 201562101827 P; 20.02.2015 US 201562118821 P
(43) Date of publication of application: 15.11.2017
(73) Proprietor: President and Fellows of Harvard College, Cambridge, MA 02138 (US); Innes, Matthew, Christopher, North Lancaster, Ontario K0C 1Z0 (CA); Pham, Minh Quan, Saint-Laurent, Québec H4L 3Y2 (CA); Schaenzer, Megan, Montréal, Québec H2L 1R7 (CA); Shanian, Ali, Montréal, Québec H2X 3R4 (CA)
(72) Inventor: INNES, Matthew, Christopher, North Lancaster, Ontario K0C 1Z0 (CA); PHAM, Minh Quan, Saint-Laurent, Québec H4L 3Y2 (CA); SCHAENZER, Megan, Montréal, Québec H2L 1R7 (CA); SHANIAN, Ali, Montréal, Québec H2X 3R4 (CA); JAVID, Farhad, Somerville, Massachusetts 02143 (US); BERTOLDI, Katia, Somerville, Massachusetts 02143 (US); TAYLOR, Michael, James, Medford, Massachusetts 02155 (US)
(74) Representative: Purdylucey Intellectual Property
(86) International application number: PCT/US2016/012766
(87) International publication number: WO 2016/112365

(56) References cited:
- US-A1- 2011 059 291
- US-A1- 2011 059 291
- US-A1- 2011 159 758
- US-A1- 2014 260 281
- US-B1- 8 652 602

## Description

### TECHNICAL FIELD

The present disclosure relates generally to porous structures with tailored Poisson's ratios. More particularly, aspects of this disclosure relate to auxetic structures with engineered patterns that exhibit negative Poisson's Ratio (NPR) behavior, as well as systems, methods and devices using such structures.

### BACKGROUND

When materials are compressed along a particular axis, they are most commonly observed to expand in directions transverse to the applied axial load. The material property that characterizes this behavior is known as the Poisson's Ratio, which is defined as the negative of the ratio of transverse/lateral strain to axial/longitudinal strain under uni-axial loading conditions. The majority of materials are characterized by a positive Poisson's Ratio (e.g., about 0.3 for aluminum, brass and steel) and will expand in the transverse direction when compressed in the axial direction and will contract in the transverse direction when stretched in the axial direction. However, materials with a negative Poisson's Ratio (NPR), also known as "auxetic" materials, will contract in the transverse direction when compressed in the axial direction and expand in the transverse direction when stretched in the axial direction.

U.S. Patent No. 5,233,828 ("'828 Patent"), to Phillip D. Napoli, shows an example of an engineered structural member - a combustor liner - utilized in high temperature applications. Combustor liners are generally used in the combustion section of a gas turbine, but can also be used in the exhaust section or in other sections of or components of the gas turbine, such as the turbine blades. In operation, the combustors burn gas at intensely high temperatures, such as 3,000°F or higher. To prevent this intense heat from damaging the combustor before it exits to a turbine, the combustor liner is inserted in the combustor to insulate the surrounding engine. To minimize temperature and pressure differentials across the combustor liners, cooling slots have conventionally been provided, as shown in '828 Patent. The '828 Patent shows a portion of an annular combustor liner having spaced cooling holes disposed in a continuous pattern, angled through the wall of the liner. U.S. Patent No. 8,066,482 B2, to James Page Strohl et al., shows another example of an engineered structural member having cooling holes shaped to enhance the cooling of a desired region of a gas turbine and to reduce stress levels in and around the cooling holes. European Patent No. EP 0971172 A1, to Dr. Jakob Keller, likewise shows another example of a perforated liner used in a combustion zone of a gas turbine. The US patent application US 2011/0059291 A1 discloses structured porous materials, where the porous structure provides a tailored Poisson's ratio ranging from a negative Poisson's ratio to a zero Poisson's ratio.

In yet another example, U.S. Patent Application Pub. No. 2010/0009120 A1, to Mary C. Boyce et al., discloses a number of transformative periodic structures which include elastomeric or elasto-plastic periodic solids that experience transformation in the structural configuration upon application of a critical macroscopic stress or strain. PCT patent application PCT/US2014/025324, to the President and Fellows of Harvard College, discloses, *inter alia*, void structures with repeating elongated-aperture patterns providing Negative Poisson's Ratio behavior. PCT patent application PCT/US2014/024830, to the President and Fellows of Harvard College, discloses, *inter alia*, a solid having an engineered void structure that causes the solid (having a positive Poisson ratio) to exhibit pseudo-auxetic (NPR) behavior upon application of stress to the solid. The engineered void structure provides a porosity amenable to, for example, applications involving gas turbine combustors.

### SUMMARY

Aspects of the present disclosure are directed toward multi-layer negative Poisson's Ratio (NPR) structures and particularly auxetic structures for industrial applications where thermo-mechanical expansion and porosity are important design considerations.

The auxetic structure includes a first sheet and a second sheet, the first sheet defining therein a plurality of first openings in a first pattern, the plurality of first openings providing a first porosity and the second sheet defining therein a plurality of second openings in a second pattern to provide a second porosity. The second sheet is overlaid on the first sheet so that the plurality of second openings at least partially occlude the plurality of first openings to define a plurality of third openings in a third pattern, the plurality of third openings defining a third porosity less than that of the first porosity or the second porosity. The second sheet is connected to the first sheet by a plurality of distinct connection elements. In some aspects, the first sheet and the second sheet have the same porosity and the same type of voids, with the only difference between them being their relative orientations and/or their scale factor.

In accordance with other aspects of the present concepts, a computer-implemented method of manufacturing a multi-sheet auxetic structure comprises the act of receiving, via one or more input devices operatively associated with a computer, design requirements of the multi-sheet structure, the received design requirements comprising at least one of a required porosity, a required Negative Poisson's Ratio (NPR) value, and a required stiffness. The method also includes the act of using the computer to construct a model for a plurality of sheets, each of the sheets defining a unit cell arrangement and opening parameters and to construct a model of a multi-sheet structure utilizing the plurality of sheets, each of the plurality of sheets being connected at center points of unit cells at least to adjoining ones of the plurality of sheets. The method also includes the act of using the computer to conduct a modeling of the multi-sheet structure under simulated loading and to determine if the multi-sheet structure satisfies the design requirements. If not, the computer is configured to execute instruction sets causing the computer to iteratively perform the acts of (i) modifying at least one aspect of the model for at least one of the plurality of sheets, the model of the multi-sheet structure, or both the model for at least one of the plurality of sheets and the model of the multi-sheet structure and (ii) modeling of the multi-sheet structure under the simulated loading until the model of the multi-sheet structure is determined to satisfy the design requirements. The method also includes the act of causing the computer to save the model of the multi-sheet structure in a non-transient physical computer-readable storage medium.

The above summary is not intended to represent every embodiment or every aspect of the present disclosure. Rather, the foregoing summary merely provides an exemplification of some of the novel aspects and features set forth herein. The above features and advantages, and other features and advantages of the present disclosure, will be readily apparent from the following detailed description of representative embodiments and modes for carrying out the present invention when taken in connection with the accompanying drawings and the appended claims.

### BRIEF DESCRIPTION OF THE DRAWINGS

FIG. 1 depicts an undeformed arrangement of auxetic sheets in isolation, and in combination to form a multi-sheet or multi-layer auxetic structure in accord with at least some aspects of the present concepts.
FIG. 2 shows another technique for combination of sheets to form a multi-sheet or multi-layer auxetic structure, wherein the front-most sheet is scaled to create a ratio of 1:2 between the sheets' unit cells, in accord with at least some aspects of the present concepts.
FIG. 3 shows yet another technique for combination of sheets to form a multi-sheet or multi-layer auxetic structure, wherein the front-most sheet is scaled to create a ratio of 1:3 between the sheets' unit cells, in accord with at least some aspects of the present concepts.
FIG. 4 shows still another technique for combination of sheets to form a multi-sheet or multi-layer auxetic structure, wherein the front-most sheet is scaled to create a ratio of 1:√2 between the sheets' unit cells and the back sheet is rotated 45° relative to the front sheet, in accord with at least some aspects of the present concepts.
FIG. 5 depicts an S-slot opening in accord with at least some aspects of the present concepts.
FIG. 6 is a flow chart depicting general aspects of a computer-implemented method for constructing a model for, and a specimen of, a multi-sheet or multi-layer auxetic structure in accordance with aspects of the present concepts.

The present disclosure is susceptible to various modifications and alternative forms, and some representative embodiments have been shown by way of example in the drawings and will be described in detail herein. It should be understood, however, that the inventive aspects are not limited to the particular forms illustrated in the drawings. Rather, the disclosure is to cover all modifications, equivalents, combinations, and alternatives falling within the spirit and scope of the invention as defined by the appended claims.

### DETAILED DESCRIPTION OF THE ILLUSTRATED EMBODIMENTS

This disclosure is susceptible of embodiment in many different forms. There are shown in the drawings, and will herein be described in detail, representative embodiments with the understanding that the present disclosure is to be considered as an exemplification of the principles of the present disclosure and is not intended to limit the broad aspects of the disclosure to the embodiments illustrated. To that extent, elements and limitations that are disclosed, for example, in the Abstract, Summary, and Detailed Description sections, but not explicitly set forth in the claims, should not be incorporated into the claims, singly or collectively, by implication, inference or otherwise. For purposes of the present detailed description, unless specifically disclaimed or logically prohibited: the singular includes the plural and vice versa; and the words "including" or "comprising" or "having" means "including without limitation." Moreover, words of approximation, such as "about," "almost," "substantially," "approximately," and the like, can be used herein in the sense of "at, near, or nearly at," or "within 3-5% of," or "within acceptable manufacturing tolerances," or any logical combination thereof, for example.

Aspects of the present disclosure are directed towards hybrid dimple-and-void auxetic structures which include repeating aperture and protrusion patterns that provide negative Poisson's Ratio (NPR) behavior when macroscopically loaded. Poisson's Ratio (or "Poisson coefficient") can be generally typified as the ratio of transverse contraction strain to longitudinal extension strain in a stretched object. Poisson's Ratio is typically positive for most materials, including many alloys, polymers, polymer foams and cellular solids, which become thinner in cross section when stretched. The auxetic structures disclosed herein exhibit a negative Poisson's Ratio behavior.

According to aspects of the disclosed concepts, when the auxetic structure is compressed along one axis (e.g., in the Y direction), coaxial strain results in a moment around the center of each cell because of the way the adjacent apertures are arranged. This, in turn, causes the cells to rotate. Each cell rotates in a direction opposite to that of its immediate neighbors. This rotation results in a reduction in the transverse axis (X-direction) distance between horizontally adjacent cells. In other words, compressing the structure in the Y direction causes it to contract in the X direction. Conversely, tension in the Y direction results in expansion in the X direction. At the scale of the entire structure, this mimics the behavior of an auxetic material. But many of the structures disclosed herein are composed of conventional materials. Thus, the unadulterated material itself may have a positive Poisson's Ratio, but by modifying the structure with the introduction of the aperture patterns and combinations disclosed herein, the structure behaves, locally and/or globally, as having a negative Poisson's Ratio.

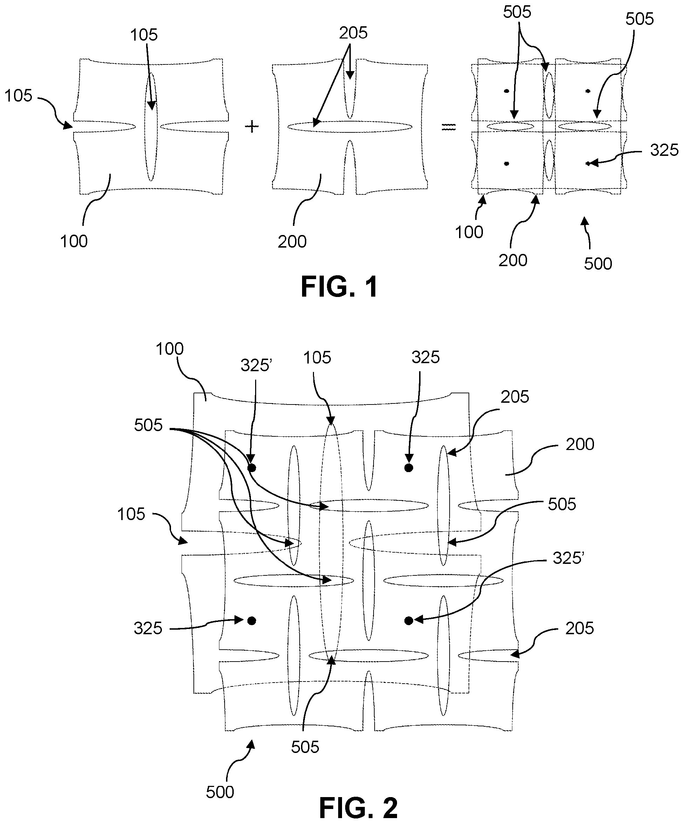

As seen in FIG. 1 for example, the NPR structure 500 comprises patterns of openings 105, 205 presented in the X-Y plane arranged to produce a resulting pattern of openings 505 in the Z-plane (perpendicular to the paper). The openings can also act as cooling and/or damping holes and, due to their arrangement, also as stress reduction features. As depicted in FIG. 1, the openings 105, 205 define horizontally-oriented and vertically-oriented elongated (e.g., elliptical) structures (also referred to herein as "apertures," "voids," "slots" or "through-holes"). In at least some aspects of the present concepts, these elongated openings are arranged in repeating patterns that may be local or global in extent, such as an array with at least substantially equally spaced rows and columns of openings. As shown in the example of FIG. 1, the horizontally-oriented and vertically-oriented openings 105, 205 alternate such that a vertically-oriented opening is adjacently disposed to horizontally-oriented openings and vice versa.

The NPR structures disclosed herein may be utilized, for example, in a gas turbine combustor wall, which requires a certain "porosity" (i.e., openings for cooling air flow), defined generally as the surface area of the apertures, A_{A}, divided by the surface area of the structure, A_{S}, or Porosity = A_{A} / A_{S}. By way of example, a porosity of 40-50% may be required for a particular component. In various aspects of the present concepts, the porosity of the disclosed NPR structure can be tailored to provide any desired porosity between, for example, 0-50% (e.g., between 0.3-9%, between 1-4%, approximately 2%, etc.) by selective combination of two or more layers of structures (e.g., structures 100, 200 in FIG. 1) having openings (e.g., openings 105, 205 in FIG. 1) defined therein. As represented in FIG. 1, the combination of a first layer 100 bearing a first pattern of openings 105 and a second layer 100 bearing a second pattern of openings 205 forms an NPR structure 500 bearing a third pattern of openings 505. In at least some aspects of the present concepts, each of the first layer 100 and the second layer 200 comprise the same pattern of openings (e.g., openings 105), with the NPR structure 500 being formed by connecting, via connection elements 325, the first and second layers with an offset in the patterns of openings 105, such offset being one or more of a lateral offset (e.g., in the X-Y plane) and/or a normal offset (i.e., in the Z-direction) and/or rotational offset (e.g., the first sheet 100 is rotated relative to the second sheet by a selected angle).

In some embodiments, the material of one or more of the layers 100, 200 comprises a superalloy, such as a nickel-based superalloy, including but not limited to Inconel (e.g. IN100, IN600, IN713), Waspaloy, Rene alloys (e.g. Rene 41, Rene 80, Rene 95, Rene N5), Haynes alloys, Incoloy, MP98T, TMS alloys or CMSX (e.g. CMSX-4) single crystal alloys. The present concepts are not material-limited, may comprise other materials (e.g., stainless steel, titanium, etc.) suitable for utilization in a particular application utilizing a non-zero porosity structure. By way of example, the NPR structure 500 may comprise a first layer 100 of a first material composition, a second layer 200 of a second material composition, a third layer of a third material composition, etcetera. Alternatively, each of the layers forming the NPR structure 500 may comprise the same material.

Each layer 100, 200, as well as the NPR structure 500, each present a preselected aspect ratio for the elongated openings 105, 205, 505. As used herein, the "aspect ratio" of the openings is defined to mean the length of the opening divided by the width of the opening, or the length of the major axis divided by the length of the minor axis of the opening. It may be desirable, in some embodiments, that the aspect ratio of the openings be approximately 5-40 or, in some embodiments, approximately 20-30. Dimensionally, the disclosed concepts and structures are presented utilizing patterns having a millimeter lengthscale; however, the concepts are not limited to any particular lengthscale and the concepts are equally applicable to structures possessing the same patterns and structures at smaller or larger lengthscales.

Again, in the example of FIG. 1, a first layer 100 and a second layer 200 of a high porosity pseudo-auxetic sheet, such as is disclosed by way of example in WO 2014151045 A1 or US 20110059291 A1, are attached to each other in such a way as to ensure that each layer at least partially occludes or covers the openings of the other layer (e.g., layer 200 at least partially occludes the openings 105 in the first layer 100). In some aspects, a layer (e.g., 200) is disposed to mostly occlude or cover (e.g., greater than 50%) openings (e.g., 105) in an adjacent layer (e.g., layer 100). By controlling the selection of the openings in each of a plurality of layers and the relative positioning of the layers relative to one another, the effective porosity of the structure can be tailored to achieve a specific porosity (e.g., a low percentage porosity or even a null percentage porosity), consequently enabling the present concepts to be utilized in a variety of potential applications, inclusive of applications requiring zero porosity.

As to the attachment of one layer (e.g., layer 100) to another layer (e.g., layer 200), the layers can be attached to one another in a number of conventional ways, a few illustrative examples of which follow.

In a first example, as shown in FIG. 1, two identical auxetic or pseudo-auxetic layers or sheets 100, 200 are disposed adjacent one another such that the second layer 200 is rotated by 90° with respect to the first layer 100. As shown in FIG. 1, the layers are joined at the center points of their unit cells at which the layers have relative rotation but their relative displacement is zero. Since the layer's unit cells rotate in opposite directions under the same loading, rivet joints can be advantageously used as the connection elements 325 as they permit rotation of the unit cells.

In a second example, shown in FIG. 2, two similar auxetic or pseudo-auxetic layers or sheets 100, 200 are disposed adjacent one another such that the second layer 200 is rotated by 90° with respect to the first layer 100. In FIG. 2, the substructure of one layer (i.e., layer 200 as shown) is scaled to half the size (1:2) of the other layer (i.e., layer 100)). In this configuration, the layers 100, 200 are attached via a combination of different types of connection elements 325, 325' at the center points of the sheet (e.g., 100) with the larger scale substructure. Since the rotation direction of half of the unit cells under loading is the same in both layers, welded joints 325' can be used to connect them, while the other half are connected using rivets 325 which permit relative rotation therebetween. Preferably, the layers 100, 200 are joined at the center points of their unit cells, at which point the layers may possess a relative rotation under loading, but do not exhibit a relative displacement. As noted above, where the layers unit cells rotate in opposite directions under the same loading, rivet joints can be advantageously used as the connection elements 325 as they permit relative rotation of the unit cells.

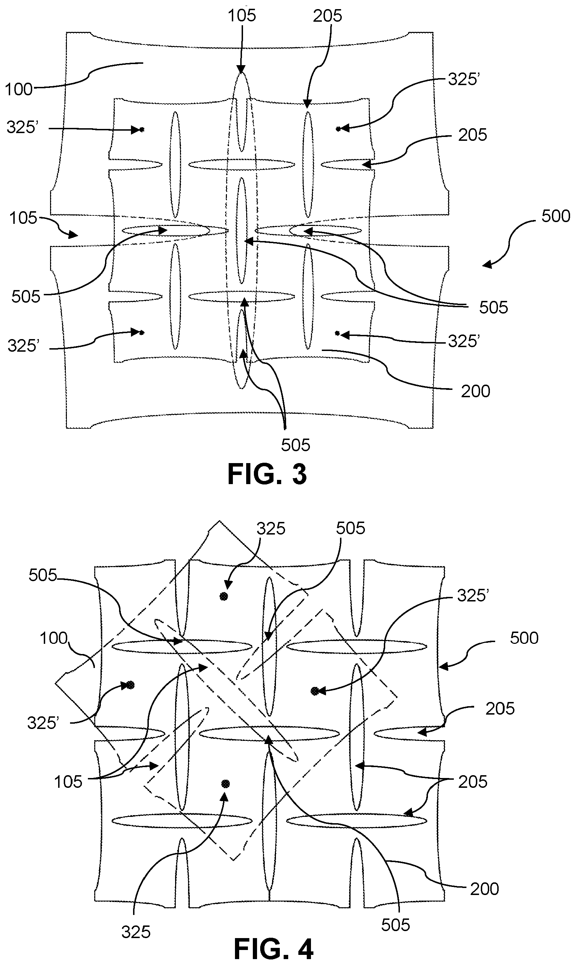

In a third example of an NPR structure 500, shown in FIG. 3, two similar auxetic or pseudo-auxetic layers or sheets 100, 200 are disposed adjacent one another such that the second layer 200 is rotated by 90° with respect to the first layer 100. In FIG. 3, the substructure of one layer (i.e., layer 200 as shown) is scaled to a ratio (1*:n*) of the other layer (i.e., layer 100)), wherein n may be any integer, but in this instance is 3, to yield a ratio of 1:3. In this configuration, the layers 100, 200 are attached via connection elements 325' comprising welded joints at the center points of the sheet (e.g., 100) with the larger scale substructure. Alternatively, the embodiment of FIG. 3 could use riveted connection elements 325.

In the NPR structure 500 shown FIG. 4, one of the layers or sheets (e.g., back layer 100) is rotated by 45° and scaled to 1:V2 (1:1.4142) before being connected to the other depicted layer or sheet (e.g., 200). In this design, half of the connection elements 325 are riveted connections (where the rotation direction of the unit cells under load is different as between layers 100, 200) while the other connection elements 325' (where the rotation direction of the unit cells under loading is the same as between layers 100, 200) are welded or riveted.

In the above-noted examples, the relation between and connections between two layers of auxetic sheets 100, 200 was discussed; however, it is to be emphasized that the present concept expressly contemplate the use of any number of layered sheets, and particularly layered auxetic sheets, to provide control over the resulting porosity of the NPR structure 500.

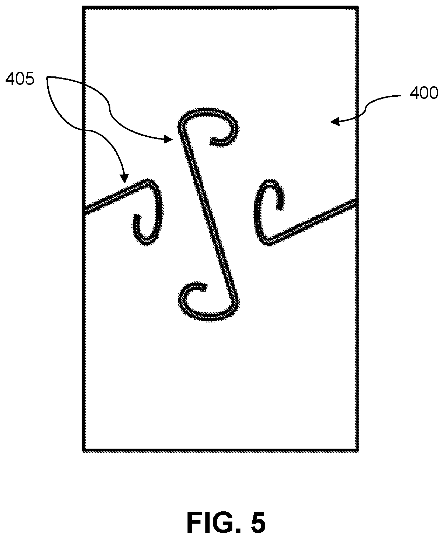

Further, although the concepts of a multi-layer auxetic structure and methods for forming a multi-layer auxetic structure are disclosed in relation to layers or sheets with elliptical openings 105, 205, auxetic layers or sheets with all manners of openings (e.g., stop-holes, double-T voids, S-slots, etc.) can also be attached together via connection elements (e.g., rivets, welds, etc.) to yield a multi-layer auxetic or NPR structure in accord with the present concepts. By way of illustration, FIG. 5 shows an example of an NPR sheet 400 comprising S-slots 405 extending therethrough. In accord with the example of FIG. 1, a plurality of the sheets 400 shown in FIG. 5 (and/or other sheets such as, but not limited to, sheets 100, 200 of FIG. 1) can be arranged adjacent one another and connected via connection elements 325 in a manner that permits relative movement of the plural unit cells under load, where necessary.

The multi-layer structure in accord with aspects of the present concepts not only achieves auxetic behavior, but also enables a tailored reduction in porosity. By way of example, the aforementioned techniques may be used to provide an NPR structure having a porosity of 1.6% by combining a first layer having a 5% porosity pattern comprising elliptical voids (see, e.g., FIG. 1) with a second layer also having a 5% porosity pattern and comprising elliptical voids, wherein the aspect ratio of the ellipses is 30 in both of the layers. If these two layers are connected using the connection technique shown in FIG. 1 (i.e., identical sheets connected to one another where is the second layer is rotated 90° relative to the first layer) to produce an NPR structure having a porosity of 1.6%. Stacking of the openings (e.g., 105, 205, 405, etc.) in accord with the present concepts, particularly with permitted variance in selection of aspect ratios and scaling of one or more sheets, permits tailoring of the porosity to any desired level. By way of illustration, if S-shaped slots (see FIG. 5) were to have been used in the above example rather than elliptical openings, the reduction in porosity will be even more significant (resulting in a structure having a porosity less than 1.6%).

Although the particular application of auxetic structures in gas turbine components is emphasized, the concept can be applied to other industrial components where transverse thermo-mechanical expansion and/or fatigue failure should be considered in the components' design.

In accord with at least some aspects of the present concepts, a design of an NPR structure 300 is informed by a known final porosity value that is to be achieved, as well as a required negative Poisson's ratio and maximum allowable stress of the structure. Within this design envelope, the permissible geometry of the openings (e.g., pattern, shape (e.g., elliptical, S-shaped, etc.), aspect ratio, etc.) are determined for the application. It may be determined that the design envelope permits utilization of a single-layer NPR structure having a suitable porosity value and such a single layer NPR structure may be utilized in accord with conventional techniques. However, if the porosity of this single-layer NPR structure is higher than the porosity required for the application, a plurality of layers or sheets (e.g., 100, 200, etc.) can be advantageously designed and constructed to provide a tuned, multi-layer NPR structure having the desired porosity. In general, there is no preference over the different configurations, respectively shown in FIGS. 1-4, for connecting the layers to each other. The final configuration for the NPR structure 300 is determined by the required porosity.

For example, for a plurality of sheets of fixed porosity patterned with elliptical voids, the porosity reduction obtained by layered combinations of two (or more) auxetic sheets is inversely related to the ellipses' aspect ratio such that sheets with higher aspect ratio ellipses provide greater reductions in porosity than sheets with lower aspect ratio ellipses. A degree of porosity reduction is also related to the number of sheets used, with greater numbers of sheets used in combination leading to correspondingly greater reductions in porosity.

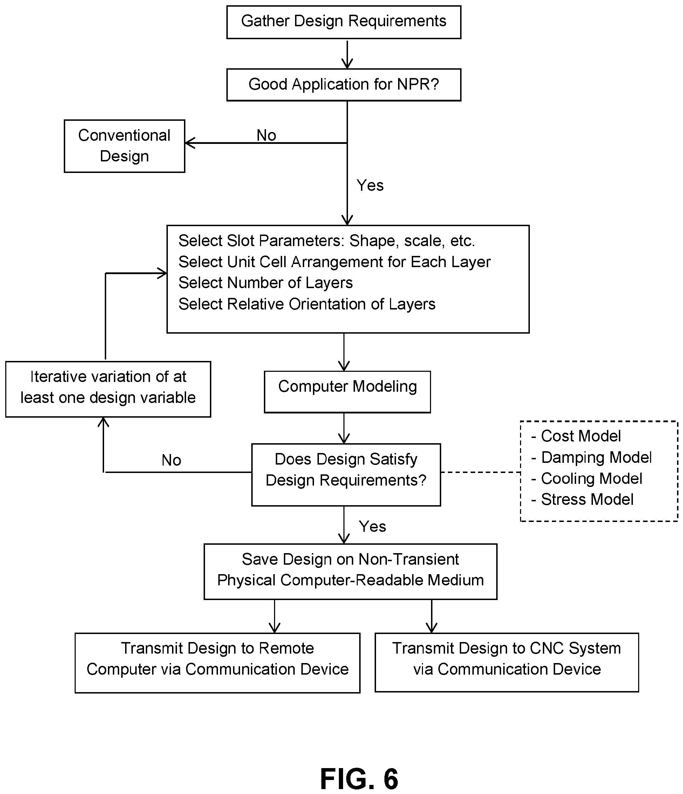

With reference to the flow chart of FIG. 6, a method of designing and fabricating an auxetic structure is generally illustrated in accord with at least some aspects of the present disclosure. FIG. 6 represents generalized aspects of one, non-limiting process for designing NPR structures utilizing a computer (e.g., via a computer aided design (CAD) or computer automated manufacturing (CAM) system) to perform any or all of the above or below described functions associated with the disclosed concepts.

As a starting point, the method requires an input of relevant design requirements for a structure, such as but not limited to external load requirements, thermal damping requirements, Poisson's ratio (if specified), porosity, stiffness, etcetera. From these design requirements, it is then determined whether the design requirements for the structure would potentially benefit from utilization of an auxetic (NPR) structure. For example, a structure can be anticipated to benefit from an NPR structure if the intended application for the structure is thermal-stress dominated or operates under displacement-controlled loading conditions. If it is determined that the auxetic structure application is not beneficial, then a conventional design for the structure is utilized.

However, if the structure may advantageously comprise an NPR structure, a Negative Poisson's Ratio (NPR) value or anticipated acceptable range of values for the structure is determined, at least in part, from the remainder of the received design values. Responsive to the dominant design variables (e.g., stiffness, porosity, etc.), an initial design for a multi-layer structure in accord with the present concepts (e.g., the techniques presented in each of FIGS. 1-4) is developed as a starting point for further analysis and modeling. By way of example, if a structure requires a particular NPR value (or a value within a range of permissible NPR values), the slot design parameters, patterns, layering, and orientation of layers are selected to approximate, as best possible, the desired NPR value(s) while simultaneously satisfying the concomitant design variables (e.g., porosity, stiffness, etc.). In some aspects of the present concepts, it is generally determined whether the structure requires a zero porosity and/or high stiffness, a medium porosity (e.g., where porosity is generally expected to be between 0% to about 9% in the expected range of optimal application) and/or medium stiffness or a high porosity (e.g., where porosity is generally expected to be above about 9% in the expected range of optimal application) and/or low stiffness.

Once the general bounds of the structure's design are established, additional details are selected for each layer of the multi-layer structure to establish a starting point for further computer modeling including, but not limited to, selection of (for each layer) slot/opening (e.g., openings 105, 205 in FIG. 1) parameters (e.g., shape, scale, etc.), unit cell arrangement, number of layers, and relative orientation of layers. Computer modeling is then performed to determine if the design satisfies all of the design requirements (e.g., a required porosity, a required stiffness, etc.). If all of the design requirements are not satisfied, the method implemented by the computer modeling system iteratively varies one or more design variables (e.g., increase or decrease a size of the openings, alter a shape of the openings, add or subtract layers, increase or decrease a relative orientation of one layer to another layer, increase or decrease an area of the openings, etc.) as an input to the next iteration of computer modeling. This process continues at least until a design is determined to satisfy all design requirements and may advantageously utilize one of more conventional design models in such determination, such as but not limited to a cost model, damping model, cooling model, stress model, etcetera. Desirably, but not necessarily, this process continues until a set of designs satisfying all design requirements is determined, from which set an optimal design for a particular application can be ascertained (e.g., a lowest cost option, a longest life option, etc.).

Once a suitable design has been determined, it is saved on a non-transient physical computer-readable medium for later (or substantially concurrent) transmission to a remote computer or CNC (computer numerical control) system via a suitable conventional wireless or hard-wired communication device. The design process generally disclosed is advantageously computer-implemented using a computer-executable set(s) of instructions borne by a non-transient physical computer-readable medium such as a hard disk, magnetic tape, magnetic drive, CD-ROM, DVD, RAM, PROM, EPROM, FLASH-EPROM, or semiconductor memory device (memory chip, flash drive, etc.). These set(s) of instructions are executed by one or more processors operatively associated with a computer (e.g., a desktop computer, laptop computer, tablet computer, handheld device, etc.) to design a multi-layer NPR structure subject to a predetermined design envelope (e.g., maximum stress, minimum predetermined lifespan, etc.) and to save and/or transmit such design to an external computer or system. By way of example, the external computer or system comprises a CNC machine (e.g., laser cutter) used to form individual layers of the multi-layer NPR structure to cause the CNC machine to create one or more layers of the multi-layer structure.

In accord with the present concepts, a uniform or "universal" single-layer structure (a single sheet material having openings of a specified porosity and opening geometry) can be used to fabricate a plurality of different NPR structures having a plurality of different porosities. These NPR structures provide lower stresses and longer fatigue lives than conventional structures and can be further tuned to have higher stiffness and better load-bearing capacities.

This invention can be used in a wide range of industrial components where thermo-mechanical expansion and porosity (or absence of porosity) are important including, but not limited to, turbine components, heat exchangers, piping, supports, fuselages, automotive or vehicular components, or any other structure or component subjected to mechanical and/or thermal loading. By way of example, it is noted that if the same type of sheets (e.g., elliptical openings with aspect ratio equal to 30) are attached using the technique shown in FIG. 2, the porosity of the bilayer structure reduces to zero. Thus, even for non-porous NPR structures, the present concepts can be advantageously utilized to create a desired NPR structure from a plurality of uniform single-layer structures.

The sheets, such as sheet steel or Inconel, can be made individually using CNC laser cutting or other conventional forming process (e.g., punching, straight or curved slitting, perforating, sawing, flame cutting, water jet machining, etc.), and can then be welded or riveted to each other to make the necessary connections.

## Claims

1. An auxetic structure comprising:
a first sheet defining therein a plurality of first openings in a first pattern, the plurality of first openings defining a first porosity; and
a second sheet defining therein a plurality of second openings in a second pattern, the plurality of second openings defining a second porosity,
wherein the second sheet overlays the first sheet so that the plurality of second openings at least partially occlude the plurality of first openings to define a plurality of third openings in a third pattern, the plurality of third openings defining a third porosity less than that of the first porosity or the second porosity, and
wherein the second sheet is connected to the first sheet by a plurality of distinct connection elements.

2. The auxetic structure of claim 1, wherein the plurality of first openings comprises elongated openings having a major axis perpendicular to a minor axis.

3. The auxetic structure of claim 2, wherein the plurality of second openings comprises elongated openings having a major axis perpendicular to a minor axis.

4. The auxetic structure of claim 3, wherein the first pattern and the second pattern comprise a plurality of rows of the elongated openings, with each row having elongated openings that alternate between disposing the major axis and the minor axis along the row.

5. The auxetic structure of claim 4, wherein the first porosity and the second porosity are at least substantially the same.

6. The auxetic structure of claim 3, wherein the aspect ratio of the first openings and the aspect ratio of the second openings are equal.

7. The auxetic structure of claim 1, wherein the first openings comprise S-shaped through slots.

8. The auxetic structure of claim 6, wherein the second openings comprise S-shaped through slots.

9. The auxetic structure of claim 1, wherein the plurality of second openings occlude at least fifty percent of an area of the plurality of first openings.

10. The auxetic structure of claim 1, wherein the plurality of distinct connection elements comprise pins or rivets disposed at overlapping center points of unit cells of the first sheet and second sheet, wherein a rotation direction of the unit cell of the first sheet and the unit cell of the second sheet under loading are in opposite direction.

11. The auxetic structure of claim 1, wherein the plurality of distinct connection elements comprise welds disposed at overlapping center points of unit cells of the first sheet and second sheet, wherein a rotation direction of the unit cells of the first sheet and second sheet under loading is the same direction.

12. The auxetic structure of claim 1, wherein the first sheet and the second sheet each comprise a metallic sheet.

13. The auxetic structure of claim 1, wherein the configuration of the first sheet and the second sheet are the same.

## Patentansprüche

1. Auxetische Struktur, die Folgendes umfasst:
eine erste Platte, die eine Vielzahl erster Löcher in einem ersten Muster darin definiert, wobei die Vielzahl erster Löcher eine erste Porosität definiert; und
eine zweite Platte, die eine Vielzahl zweiter Löcher in einem zweiten Muster darin definiert, wobei die Vielzahl zweiter Löcher eine zweite Porosität definiert;
wobei die zweite Platte auf der ersten Platte liegt, sodass die Vielzahl zweiter Löcher die Vielzahl erster Löcher teilweise verdeckt, um eine Vielzahl dritter Löcher in einem dritten Muster zu definieren, wobei die Vielzahl dritter Löcher eine dritte Porosität definiert, die geringer als die erste Porosität oder die zweite Porosität ist, und
wobei die zweite Platte durch eine Vielzahl separater Verbindungselemente mit der ersten Platte verbunden ist.

2. Auxetische Struktur nach Anspruch 1, wobei die Vielzahl erster Löcher langgestreckte Löcher mit einer zu einer Nebenachse senkrechten Hauptachse aufweist.

3. Auxetische Struktur nach Anspruch 2, wobei die Vielzahl zweiter Löcher langgestreckte Löcher mit einer zu einer Nebenachse senkrechten Hauptachse aufweist.

4. Auxetische Struktur nach Anspruch 3, wobei das erste Muster und das zweite Muster eine Vielzahl von Reihen der langgestreckten Löcher umfassen, wobei jede Reihe langgestreckte Löcher aufweist, bei denen abwechselnd die Hauptachse und die Nebenachse entlang der Reihe angeordnet ist.

5. Auxetische Struktur nach Anspruch 4, wobei die erste Porosität und die zweite Porosität mindestens im Wesentlichen gleich sind.

6. Auxetische Struktur nach Anspruch 3, wobei der Formfaktor der ersten Löcher und der Formfaktor der zweiten Löcher gleich sind.

7. Auxetische Struktur nach Anspruch 1, wobei die ersten Löcher S-förmige Durchgangsschlitze umfassen.

8. Auxetische Struktur nach Anspruch 6, wobei die zweiten Löcher S-förmige Durchgangsschlitze umfassen.

9. Auxetische Struktur nach Anspruch 1, wobei die Vielzahl zweiter Löcher mindestens fünfzig Prozent einer Fläche der Vielzahl erster Löcher verdeckt.

10. Auxetische Struktur nach Anspruch 1, wobei die Vielzahl separater Verbindungselemente Stifte oder Niete umfasst, die an überlappenden Mittelpunkten von Einheitszellen der ersten Platte und der zweiten Platte angeordnet sind, wobei eine Drehungsrichtung der Einheitszelle der ersten Platte und der Einheitszelle der zweiten Platte unter Belastung in entgegengesetzten Richtungen liegen.

11. Auxetische Struktur nach Anspruch 1, wobei die Vielzahl separater Verbindungselemente Schweißungen umfasst, die an überlappenden Mittelpunkten von Einheitszellen der ersten Platte und der zweiten Platte angeordnet sind, wobei es sich bei einer Drehungsrichtung der Einheitszellen der ersten Platte und der zweiten Platte unter Belastung um dieselbe Richtung handelt.

12. Auxetische Struktur nach Anspruch 1, wobei die erste Platte und die zweite Platte jeweils ein Metallblech umfassen

13. Auxetische Struktur nach Anspruch 1, wobei die Konfiguration der ersten Platte und der zweiten Platte gleich sind.

## Revendications

1. Structure auxétique comprenant :
une première feuille définissant dans celle-ci une pluralité de premières ouvertures selon un premier motif, la pluralité de premières ouvertures définissant une première porosité ; et
une deuxième feuille définissant dans celle-ci une pluralité de deuxièmes ouvertures selon un deuxième motif, la pluralité de deuxièmes ouvertures définissant une deuxième porosité,
dans laquelle la deuxième feuille recouvre la première feuille de sorte que la pluralité de deuxièmes ouvertures occulte au moins partiellement la pluralité de premières ouvertures pour définir une pluralité de troisièmes ouvertures selon un troisième motif, la pluralité de troisièmes ouvertures définissant une troisième porosité inférieure à la première porosité ou à la deuxième porosité, et
dans laquelle la deuxième feuille est reliée à la première feuille par une pluralité d'éléments de connexion distincts.

2. Structure auxétique selon la revendication 1, dans laquelle la pluralité de premières ouvertures comprend des ouvertures allongées ayant un axe principal perpendiculaire à un axe secondaire.

3. Structure auxétique selon la revendication 2, dans laquelle la pluralité de deuxièmes ouvertures comprend des ouvertures allongées ayant un axe principal perpendiculaire à un axe secondaire.

4. Structure auxétique selon la revendication 3, dans laquelle le premier motif et le deuxième motif comprennent une pluralité de rangées des ouvertures allongées, chaque rangée ayant des ouvertures allongées qui alternent entre la disposition de l'axe principal et de l'axe secondaire le long de la rangée.

5. Structure auxétique selon la revendication 4, dans laquelle la première porosité et la deuxième porosité sont au moins sensiblement les mêmes.

6. Structure auxétique selon la revendication 3, dans laquelle le rapport de forme des premières ouvertures et le rapport de forme des deuxièmes ouvertures sont égaux.

7. Structure auxétique selon la revendication 1, dans laquelle les premières ouvertures comprennent des fentes traversantes en forme de S.

8. Structure auxétique selon la revendication 6, dans laquelle les deuxièmes ouvertures comprennent des fentes traversantes en forme de S.

9. Structure auxétique selon la revendication 1, dans laquelle la pluralité des deuxièmes ouvertures occulte au moins cinquante pour cent d'une surface de la pluralité des premières ouvertures.

10. Structure auxétique selon la revendication 1, dans laquelle la pluralité d'éléments de connexion distincts comprend des broches ou des rivets disposés à des points centraux qui se chevauchent de cellules unitaires de la première feuille et de la deuxième feuille, dans laquelle un sens de rotation de la cellule unitaire de la première feuille et de la cellule unitaire de la deuxième feuille sous charge sont dans des sens opposés.

11. Structure auxétique selon la revendication 1, dans laquelle la pluralité d'éléments de connexion distincts comprend des soudures disposées à des points centraux qui se chevauchent de cellules unitaires de la première feuille et de la deuxième feuille, dans laquelle un sens de rotation des cellules unitaires de la première feuille et de la deuxième feuille sous charge est le même sens.

12. Structure auxétique selon la revendication 1, dans laquelle la première feuille et la deuxième feuille comprennent chacune une feuille métallique.

13. Structure auxétique selon la revendication 1, dans laquelle la configuration de la première feuille et de la deuxième feuille sont les mêmes.
